Europäisches Patentamt

European Patent Office

Office européen des brevets

(11) Publication number: **0 250 660 B1**

# EUROPEAN PATENT SPECIFICATION

(45) Date of publication of patent specification: 27.03.91    (51) Int. Cl.⁵: **G01P 5/00**, G01F 1/66

(21) Application number: 86304280.0

(22) Date of filing: 05.06.86

(54) Fluid velocity measuring method and apparatus.

(43) Date of publication of application:
**07.01.88 Bulletin 88/01**

(45) Publication of the grant of the patent:
**27.03.91 Bulletin 91/13**

(84) Designated Contracting States:
**GB IT NL**

(56) References cited:
EP-A- 0 007 782
EP-A- 0 218 126
US-A- 2 921 467

**PATENT ABSTRACTS OF JAPAN, vol. 8, no.
65 (P-263)[1502], 27th March 1984 & JP-
A-58-211 667**

(73) Proprietor: **Moore Products Co.
Sumneytown Pike Spring House
Philadelphia, PA 19477(US)**

(72) Inventor: **Moore, James O.
29 Crest Terrace
Worcester PA.19490(US)**

(74) Representative: **Newby, John Ross et al
J.Y. & G.W. Johnson Furnival House 14/18
High Holborn
London WC1V 6DE(GB)**

## Description

This invention relates to a method and apparatus for the measurement of the velocity of fluids, and particularly to such method and apparatus which utilize the transmission of acoustic waves through the moving fluid.

It is known in the art to determine the velocity of a fluid by transmitting acoustic waves through the moving fluid from a transmitter of acoustic waves to a receiver of acoustic waves and deriving from the received acoustic waves indications of the velocity of the fluid; the acoustic waves are transmitted in a direction which has at least a substantial component parallel to the direction of fluid flow, and preferably such transmissions are effected both in the upstream and downstream directions and the information contained in the received waves combined to obtain the desired fluid velocity indications. Thus while transmission in one direction alone will provide information useful for some purposes, the use of upstream and downstream transmissions increases the accuracy greatly since it eliminates the factor of the velocity $v_0$ of the acoustic waves in still fluid and is not dependent thereon, which velocity $v_0$ typically may vary substantially with such factors as temperature and composition of the fluid, including for example its content of gaseous, liquid or solid materials.

In order to accomplish the upstream and downstream type of fluid velocity measurement with the best accuracy, it is known to utilize two acoustic transducers between which the fluid flows, each such transducer serving alternatively as a transmitter and a receiver of acoustic waves. More particularly, first one transducer acts as a transmitter to transmit acoustic waves to the other transducer acting as a receiver, and then the other transducer is caused to transmit acoustic waves to the first transducer which then acts as a receiver. In this way, undesired differences in upstream and downstream acoustic wave delays due to use of different transducers for the two directions of transmission are greatly mitigated.

Known types of acoustic fluid velocity measuring systems include the Doppler frequency system which detects apparent changes in acoustic wave frequency due to fluid motion, but which has the drawback that particles must normally be present in the fluid in order to develop a suitable signal, and that accuracy is usually limited to about 5% at best.

It is also known to measure fluid velocity by transmitting a short acoustic-wave pulse through the fluid to the receiver, and measuring directly the propagation delay of the impulse in travelling from transmitter to receiver; this again may be done in both the upstream and downstream directions. Typically the pulse delay is converted to a frequency equal to 1/delay by means of a feedback circuit, and the difference between the resultant "upstream" and "downsteam" frequencies is used as a measurement of flow velocity which is substantially independent of sound velocity in the still fluid. A limitation of this method is that in order to get the necessary resolution of the pulses, the transducer must operate in the megahertz region where propagation losses are undesirably high in liquids, and so high in gases as to make the system virtually unuseable. Also, the necessity for transmitting and receiving a narrow pulse limits the energy available for detection, and for best results requires use of transducers with very wide bandwidths.

Phase comparison methods are also known to measure the fluid velocity. In such systems the phase of the transmitted signal is compared to that of the received signal; typically the phase delay for downstream propagation is compared with the phase delay for upstream propagation to give a sensitive measurement of fluid flow rate. This technique has the advantage that greater signal power can be transmitted than when only a narrow transmitted pulse is used, providing a better signal to noise ratio. Also, the frequencies employed are lower than in the narrow-pulse system, making operation in gas practical, with generally less attenuation in any medium.

However, known phase comparison methods depend on knowledge of ambient sound velocity $v_0$, which varies widely with temperature and type of fluid. Also, accuracy will generally suffer if there are any significant reflections of the acoustic waves from the transducers or from the surrounding walls of the fluid chamber. Particularly troublesome are triple reflections directly off the transducer faces themselves. Standing waves caused by such reflections can often affect the accuracy by 50% or more; also, linearity as the function of fluid velocity is affected by such standing waves.

It is therefore an object of the present invention to provide a new and useful method and apparatus for measuring the velocity of a fluid.

Another object is to provide such method and apparatus which retain the principal advantages of the phase comparison methods of measurement previously known, but avoid or greatly reduce the drawbacks associated with previously known phase comparison methods.

Still another object is to provide such method and apparatus which is accurate over a wide range of temperatures and fluid types and compositions, and at the same time provides accurate measurement.

What constitutes the invention is defined in the following claims 1 and 5.

In broad terms, the velocity of the fluid is determined by transmitting through it at different times acoustic waves of different frequencies, rather than of the same frequencies, and detecting the differences in phase delay of such transmitted signals due to the differences in frequencies between the acoustic waves producing the phase delays. By means of apparatus and steps described in detail hereinafter, the signals representing the differences in the frequencies and the corresponding differences in the phase delays of the acoustic waves are used to determine the velocity of the fluid through which the waves propagate.

As an example, and as demonstrated hereinafter, the fluid velocity $V_f$ may be expressed as:

$$V_F = .\pi L \left( \frac{1}{\Delta\theta_d / \Delta f_d} - \frac{1}{\Delta\theta_u / \Delta f_u} \right) ,$$

where L is the spacing between a pair of transmitting and receiving acoustic transducers, $\Delta\theta_d$ is the change in phase delay of the downstream acoustic wave due to a shift $\Delta f_d$ in frequency, and $\Delta\theta_u$ is the change in phase delay of the acoustic waves transmitted upstream due to a shift in frequency $\Delta f_u$.

It has been noted that, for a constant spacing between the transducers and for any given fluid velocity, $\Delta\theta_d / \Delta f_d$ and $\Delta\theta_u / \Delta f_u$ may be represented as the slopes $M_d$ and $M_u$, of straight line graphs representing the relationship between frequency and phase delay for the downstream and upstream transmission cases respectively. The measurement described above utilizing a pair of different transmission frequencies in each direction of propagation provides an indication of each of these slopes. However, due to spurious signals caused by such things as undesired reflections and second-round echoes from the transducers, in practice these graphs for the up and down transmissions are not the idealized straight lines one might expect. Instead they tend to oscillate back and forth between opposite sides of the true idealized line. If one or both of the frequencies utilized for the phase delay measurement occurs at a point which is not on the idealized straight line graph, the slope measurement obtained from use of these two frequencies will usually be in error. It is therefore desirable to utilize a substantial number of pairs of different frequencies and to average the slope measurements thereby obtained or, preferably, to apply other statistical data-enhancing techniques to them, such as least-squares curve-fitting.

Furthermore, the pairs of frequencies utilized to determine the frequency versus phase-delay slopes are preferably close enough to each other that the corresponding differences in phase delay are less than 360° ($2\pi$ radians). In such cases there is never any ambiguity in the measurement with respect to whether the phase delay that occurs is equal to the measured value $\theta$ or to a phase delay $\theta + N2\pi$, as would otherwise occur when utilizing a conventional phase comparison type of phase detector. The frequency differences used can be constant, can be the same for upstream and downstream measurements, can be equal or unequal to each other, or can be random with respect to frequency and with respect to frequency difference. By utilizing a random choice of frequencies, phase errors due to facts such as those described above can to some extent be averaged out, especially if they occur cyclically as a function of frequency.

In some cases the phase change produced by a difference $\Delta f$ in frequency of a pair of transmitted frequencies may be less than 360°, but may bridge the zero-phase condition of the phase comparator; for example, $f_1$ might produce a phase delay $\theta_1$ of 350° and $f_2$ might produce a phase delay $\theta_2$ of 370°, giving a phase difference $\theta_2 - \theta_1$ of 20°. Since the typical phase detector would sense a change from 350° to 10°, rather than from 350° to 370°, its output would typically provide a false indication of $\theta_2 - \theta_1$. In order to avoid such an anomalous measurement, it is possible to use apparatus which detects such an anomalous direction of change between frequencies of a frequency pair, and to add 360°, or $2\pi$ radians, to the second measurement, so that the measured difference between the phase delays due to the two different frequencies will be correct. However, in the preferred embodiment, a novel technique is used in which the frequencies of all received transmissions are divided by a factor D such that even though the phases of the received signals may extend over several multiples of 360°, the frequency-divided signal exhibit phase changes of less than 360°, and the phase ambiguity is thereby removed.

The invention will be more readily understood from a consideration of the following detailed description, taken in connection with accompanying drawings, in which:

Figure 1 is a schematic block diagram illustrating a preferred embodiment of the overall system of the invention;

Figures 2A and 2B are graphical representations to which reference will be made in explaining the

3

theory of the invention;

Figures 3 and 4 are graphical representations to which reference will be made in explaining the operation of a preferred embodiment of the invention; and

Figure 5 is a more detailed block diagram of a preferred form for a portion of the system of Figure 1.

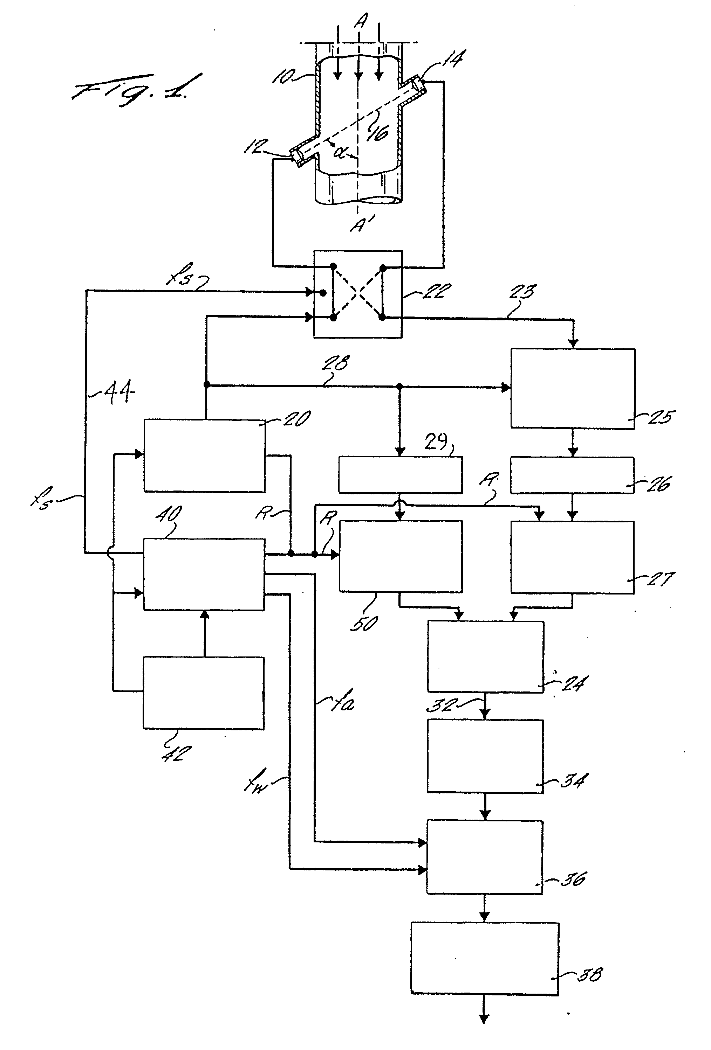

Referring first to Figure 1, there is shown a conduit 10 through which a fluid flows in the direction of the arrows. A pair of transmitter-receiver acoustic transducers 12 and 14 face each other across the conduit, along a line 16 extending obliquely across the conduit, so that the fluid flow has a component along the direction of the conduit axis A-A[1]. Each transducer is chosen to be able to transmit acoustic waves at appropriate frequencies through the fluid to the other transducer, and each is also capable of acting as an efficient receiver of such waves from the other transducer. Accordingly, one transducer may be used first as a transmitter while the other one is used as a receiver, and then the other may be used as a transmitter while the first one acts as a receiver. The ultimate objective is to measure the velocity of fluid flow along the axis of the conduit, which is done by measuring the velocity $V_F$ along the axis 16 of the transducers and multiplying this by a known constant equal to the cosine of the angle $\alpha$ between the tranducer axis and the conduit axis.

Electrical signals for operating the transmitter-receiver transducers 12 and 14 are supplied from a frequency controlled oscillator 20 by way of a reversing switch 22. Reversing switch 22 is shown schematically as a mechanical double-poled double-throw switch, with cross-connections to achieve reversal, but it will be understood that in actuality it will almost always be a high-speed electronic switch performing these same functions. In the position of the switch shown in full line, the reference electrical oscillations from oscillator 20 are supplied by the switch 22 to transducer 12 for transmission, and are received by transducer 14; in the opposite position of the switch shown in broken line, the oscillations are supplied to the other transducer 14 for transmission and are received by transducer 12.

Received signals from the transducers are supplied over line 23 to a phase detector 24, by way of an amplifier and tracking filter 25, a pulse shaper 26 and a frequency divider 27 which is part of the receiver for the system.

Amplifier and tracking filter 25 may be conventional, and is supplied with a tracking control signal from oscillator 20 over line 28 so that the passband of the filter will automatically track the frequency of the received signal and thus enable efficient noise rejection. Shaper 26 may also be conventional, and serves to convert the amplified received signals into corresponding square wave signals. The frequency divider 27 has a special purpose, described in detail hereinafter.

The phase detector 24 is also supplied with the original frequency-controlled oscillations from oscillator 20 over line 28 by way of a conventional shaper 29 and a special divider 50, the latter signal serving as a reference phase signal for the phase detector. The phase detector 24 produces an output on its output line 32 which is indicative of the phase delay $\theta$ of the signal received by the phase detector, relative to the phase of the signal at the oscillator and at the transmitting tranducer. The phase-delay indicating signal on output line 32 is supplied to a low-pass filter 34 and then through an LSA apparatus 36 to a velocity computation apparatus 38, which produces an output signal representative of the velocity $V_F$ of the fluid in conduit 10 along the line 16 in Figure 1.

The oscillator 20 is controlled by the counter and logic apparatus 40 and by a clock oscillator 42, to generate and supply to the transducers oscillations at predetermined controlled frequencies, which may be designated $f_1$, $f_2$...$f_n$. Counter and logic apparatus 40 also produces a signal $f_s$ which acts over line 44 to operate the switch 22, as well as other timing signals described hereinafter.

As will be discussed hereinafter in detail, in its operation the apparatus of Figure 1 will measure the upstream phase delay $\theta_u$ for each of a plurality of frequencies and thus develop a set of signals ($\theta_{ui}$, $f_{ui}$) representing corresponding pairs of values of phase delay and frequency; similarly, the equipment measures the downstream phase delay $\theta_d$ for each of the same plurality of frequencies to produce corresponding pairs of frequency and delay data ($\theta_{di}$, $f_{di}$). The data ($\theta_{ui}$, $f_{ui}$) and ($\theta_{di}$, $f_{di}$) are then used to compute the desired fluid velocity $V_f$ from the latter input information and from a knowledge of the transducer separation L.

The general theory upon which the system and process operate may be summarized as follows.

Let :

$V_F$ = fluid velocity along direction of acoustic waves.

$v_u$ = acoustic wave velocity upstream

$v_d$ = acoustic wave velocity downstream

L = distance between upstream and downstream stations

$v_0$ = velocity of acoustic waves at zero flow velocity.

$v_u = v_0 - V_F,$

$v_d = v_0 + V_F,$

whence

$$V_F = 1/2 \ (v_d - v_u).\tag{1}$$

Also,

$$v_d = L/t_d, \quad v_u = L/t_u,\tag{2}$$

where $t_d$ and $t_u$ are wave transit times down and up stream. Substituting (2) into (1):

$$V_F = 1/2 \ L \ (1/t_d - 1/t_u)\tag{3}$$

The phase delays $\theta_u$ and $\theta_d$ are measures of $t_u$ and $t_d$, and specifically

$$t_d = \theta_d/2\pi f_d \quad \text{and} \quad t_u = \theta_u/2\pi f_u\tag{4}$$

Hence, substituting (4) into (3):

$$V_F = 1/2 \left( \frac{L}{\theta_d/2\pi f_d} - \frac{L}{\theta_u/2\pi f_u} \right)\tag{5}$$

or

$$V_F = \pi L \left( \frac{1}{\theta_d/f_d} - \frac{1}{\theta_u/f_u} \right).\tag{6}$$

Now, $\theta_d = M_D \ f_d$ and $\theta_u = M_u \ f_u$ (where $M_d$ and $M_u$ are constants for a given L and at a given $v_D$ or $v_U$), hence

$$V_F = \pi L \left( \frac{1}{M_d} - \frac{1}{M_u} \right).\tag{7}$$

One could therefore measure $\theta_d$ and $\theta_u$ and calculate $C_F$ from (5), (6) or (7), using the same or different frequencies for $f_u$ and $f_d$, and preferably performing the measurement for many different sets of frequencies and averaging the results,

However, this assumes that the total phase delays $\theta_u$ and $\theta_d$ can both be measured readily, accurately and without ambiguity of phase, which is generally not the case;

According to the invention, it is recognized that the incremental slope

$$\frac{\Delta\theta}{\Delta f} = \frac{\theta_2 - \theta_1}{f_2 - f_1}$$

equals the overall slope $\theta/f$, and that $\frac{\Delta\theta}{\Delta f}$ can be measured readily, accurately, and without phase ambiguity. Accordingly, pursuant to the invention one may evaluate equation (7) by measuring $\Delta\theta_u$, $\Delta f_u$, $\Delta\theta_d$ and $\Delta f_d$, and computing $V_F$, preferably by the formula:

5

$$V_F = \pi L \left( \frac{1}{\Delta\theta_d / \Delta f_d} - \frac{1}{\Delta\theta_u / \Delta f_u} \right) , \qquad (8)$$

One could use $\Delta\theta$ and $\Delta f$ in equation (5), in equation (6), or in some other transformation of equation (7) to calculate $V_F$, the essential thing being the use of more than on frequency in measuring both upstream and downstream phase delays, and use of the resulting information in making the calculation. That is, "incremental" slope is measured and used in the formula, and preferably many different pairs of frequencies are used for this purpose, as described below.

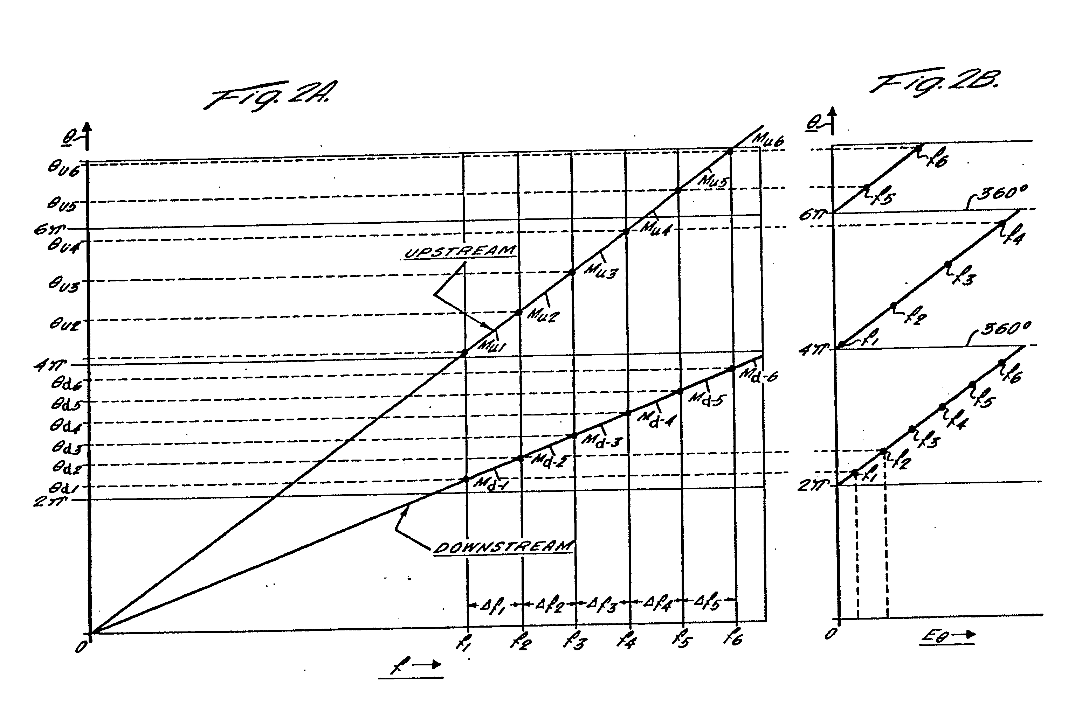

These considerations will become more clear by reference to the following, taken with Figs. 2A and 2B. In Fig. 2A, abscissae represent transmitted frequencies and ordinates represent phase delay of signals propagating between the two transducers by way of the moving fluid, while in Fig. 2B ordinates represent phase delay and abscissae represents the output voltage $E_\theta$ of the phase detector. Here it is assumed that, within a time so short that the nature and velocity of the fluid does not change appreciably, six different frequencies $f_1$, $f_2$...$f_6$ are transmitted sequentially downstream and then sequentially in the upstream direction.

The difference between the frequency $f_1$ and the frequency $f_2$ is designated as $\Delta f_1$, the difference between frequency $f_2$ and $f_3$ is designated $\Delta f_2$ and so on. Thus it is assumed that in this example the frequency differences utilized are $f_2-f_1$, $f_3-f_2$, $f_4-f_3$, $f_5-f_4$, and $f_6-f_5$.

Each of these frequencies $f_1$ through $f_6$ produces a signal having a corresponding phase delay in transit through the fluid; for $f_1$ the delay is $\theta_{d1}$, for $f_2$ it is $\theta_{d2}$, etc. during downstream transmission, while for upstream transmission $f_1$ produces the phase delay $\theta_{u1}$, $f_2$ produces the phase delay $\theta_{u2}$, etc. These differences in phase delay corresponding to $\Delta f_1$, $\Delta f_2$, etc. are $\theta_{d2} - \theta_{d1}$ and $\theta_{d3} - \theta_{d2}$ etc. for the downstream transmission, and $\theta_{u2} - \theta_{u1}$ and $\theta_{u3} - \theta_{u2}$ etc. for the upstream transmission. The phase delay difference $\theta_{d2} - \theta_{d1}$ is designated herein as $\Delta\theta_{d1}$ corresponding to the frequency difference $\Delta f_1$, and similarly for the other frequency and phase delay increments.

The straight-line graph in Fig. 2A designated "Downstream" is the idealized straight-line graph, of slope $M_d$, defining the idealized proportionality constant between frequency and phase delay for the downstream transmission case, for an arbitrary fluid velocity. For other velocities, its slope will be different. The portions of that graph between the plotted data points for the six different frequencies have incremental slopes indicated as $M_{d1}$, $M_{d2}$, etc., and in this idealized case each of these incremental slopes is the same as the overall slope $M_d$.

The upper straight-line graph designated "Upstream" is the corresponding graph defining the idealized relationship between frequency and phase delay for upstream transmissions, and the overall slope thereof may be designated as $M_u$, with its incremental slopes indicated as $M_{u1}$, $M_{u2}$, etc.

Shown in Figure 2B, at the right-hand side, is a graph showing the idealized output voltage $E_\theta$ of a standard phase detector used in the position of phase detector 24 of Figure 1, as it would be produced by the various phase delays $\theta$ of Fig. 2A due to the various frequencies f. The dots on the straight-line graph of $E_\theta$ represent the phase detector output voltages for the upstream and downstream transmissions at $f_1$ through $f_6$. These coordinate represent the $(\theta_{ui}, f_{ui})$ and $(\theta_{di}, f_{di})$ data referred to above.

In this connection, attention is invited to the frequency change from $f_4$ to $f_5$ during upstream transmission, for which the voltage $E_\theta$ is greater at the higher frequency $f_5$ than at the lower frequency $f_4$ because the phase delay has passed through 360° between $f_4$ and $f_5$. In all other cases shown, the higher the frequency the higher the voltage. As mentioned earlier, this anomolous direction of phase-dectector output voltage may be sensed and used to add 360° to $\theta_{u5}$, so that the difference be tween the phase detector voltages at $\theta_5$ and $\theta_4$ properly represents $\theta_{u5} - \theta_{u4}$. However, as will be described, it is preferred to avoid this problem of ambiguity instead by use of frequency dividers preceding the phase detector.

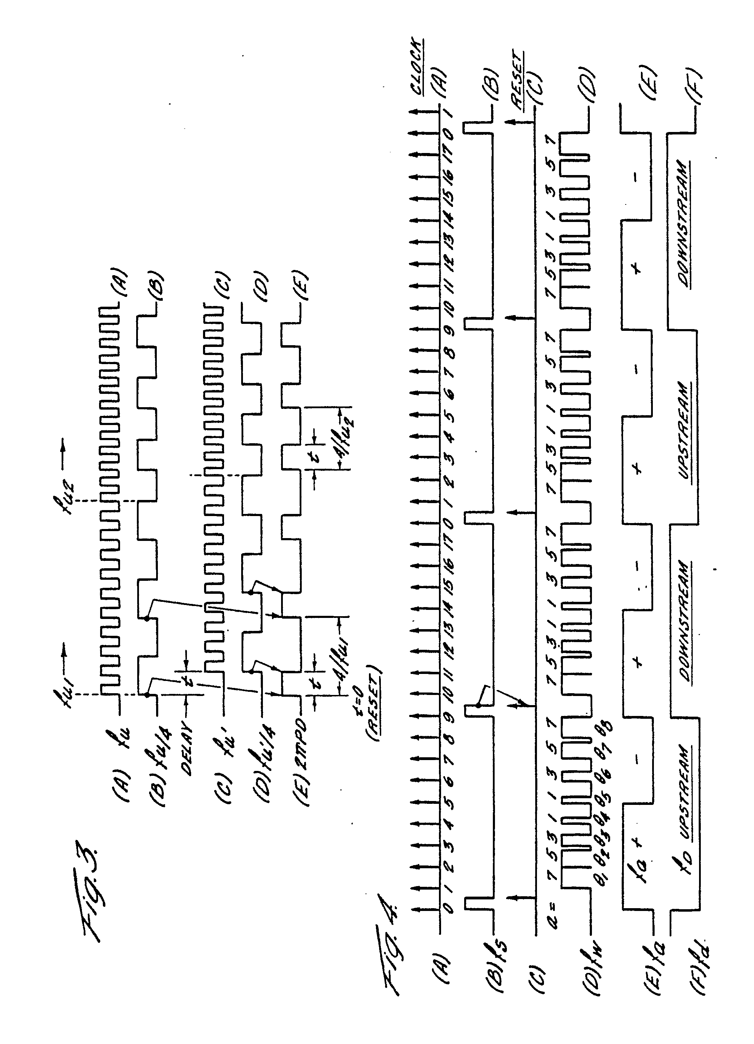

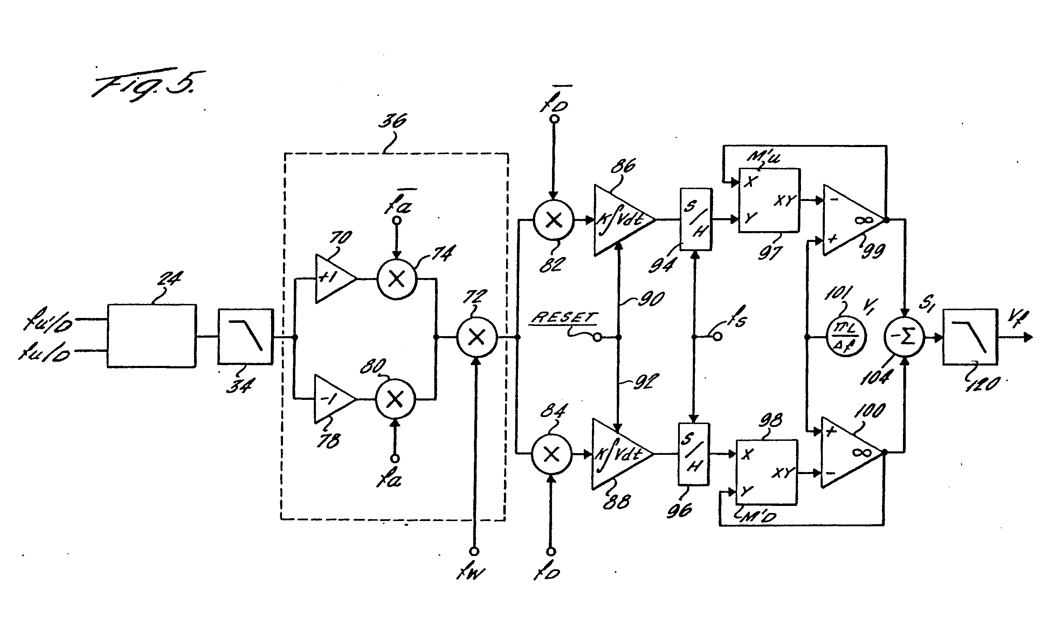

While it is recognized that in the future a design using software to perform the manipulations of the data pairs $(f_i, \theta_i)$ to obtain a signal representing flow velocity may be preferred, at present the preferred form of system actually designed is that illustrated in Figure 1 and in the detailed block diagram of Figure 4. This system uses the frequency divider 27 for the received signals, and a corresponding frequency divider 50 for the reference signal from oscillator 20, the purpose and operation of which will be appreciated from Figure 3 and the following discussion.

Figure 3 illustrates the general timing arrangement utilized in this preferred form of the invention. At A of the Figure is represented the signal transmitted by one of the transducers, say transducer 12, first at a frequency $f_u$, and then at a frequency $f_{u2}$; while during actual transmission through the fluid the signals may not have the idealized rectangular shape shown, they approach this form after reception and shaping, and since the timing considerations are the same, for simplicity the signal is shown as comprising rectangular pulses throughout the waveform diagrams.

At C of Figure 3 is shown the signal shown at A after it has passed through the fluid has been received by the other transducer 14, and has passed through the shaper 26. The delay t of the received signal shown at C, with respect to the transmitted signal shown at A, is equal to $L/v_0$, i.e. equals the separation between transducers divided by the velocity of sound in the fluid between the transducers. This delay is the same for $f_{u1}$ as for $f_{u2}$. At B of Figure 3 is shown the output of divider 50, due to the reference signal, and at D of Fig. 3 is shown the output of divider 27 produced by the received signal. For simplicity in exposition the value D of both dividers is represented as being 4.

Dividers 27 and 50 are reset to zero by reset pulses from counter and logic 40 at $t=0$ in figure 3, and hence both dividers start out in the same state. Accordingly, the output of divider 50, shown at B, is the same as the output of divider 27, shown at D, except that the entire waveform D is delayed by t. The phase detector 24 receives the signals B and D from the dividers, and produces an output therefrom shown at E which has a duty cycle proportional to the phase differences between signals B and D. That is, the percentage of the time for which the output of the phase detector is high is proportional to t and inversely proportional to the wave period P. This percentage of time, equal to $t/P$, therefore represents the phase delay of the acoustic wave, and is detected by filter 34. As f increases (as from $f_{u1}$ to $f_{u2}$), and the corresponding period P of the acoustic waves decreases, the output of phase detector 24 increases toward 100%.

As will be described hereinafter in detail, due to the use of the dividers the effective period P is increased for measurement purposes by the divider factor D, and the delay t can therefore vary over about a D times greater range, without ambiguity of output, than if the described divider system were not used.

In the system of Figures 1 and 3, the transmitted frequencies are exactly known by the equipment which generates them, and it is therefore only the corresponding values of phase delay $\theta$ which need to be measured and which therefore are subject to some error. Furthermore, the transmitted frequencies are varied in equal steps. In such case a graph of $\theta$ as a function of transmitted frequency should ideally be a straight-line of slope M, but, as mentioned previously, due to errors the measured values of $\theta$ will be scattered on each side of the ideal straight line. A least-squares algorithm is preferably used in this example to arrive at the actual value of M to be used in the formula for computing fluid velocity $V_F$. It will be understood that there are many other ways that the value of M could be arrived at, including various known averaging and curve-fitting techniques. However, the LSA approach is believed to produce a worthwhile improvement in results compared with such other methods.

For the specific embodiment being considered then, a normalized slope M' may be expressed as follows, where $M' = M \, \Delta f = \Delta \theta$:

$$M' = \frac{1}{K_M} \sum_{i=1}^{i=N} a_i \, \theta_i' \qquad (9)$$

where $K_M$ is a function of the value of N and may be expressed as:

$$K_M = \sum_{i=1}^{i=N} a_i \, i \qquad (10)$$

In Eq. (10), the coefficients $a_i$ are such as to form an arithmetic progression such that

$$a_i = -a_{N+1-i} \qquad (11)$$

and such that

$$\sum_{i=1}^{i=N} a_i = 0 \qquad . \qquad (12)$$

For N equal to 8 (the value which will be used in the specific set of parameter values set forth hereinafter), the expression for M' becomes:

7

$$M' = 7\theta_1 + 5\theta_2 + 3\theta_3 + \theta_4 - \theta_5 - 3\theta_6 - 5\theta_7 - 7\theta_8 \qquad (13)$$

In the specific embodiment of Figure 5, the latter algorithm is implemented by the LSA apparatus 36, comprising in this example a non-inverting amplifier 70 connected to a time-weighting switch 72 by way of a gating switch 74, and a reversing amplifier 78 connected to the time-weighting switch 72 by way of a gating switch 80. The output of switch 72 represents, at successive times, the successive terms in the expression for M' in equation (13). Positive terms are produced by turning on switch 74 but not switch 80 and negative times by turning on switch 80 but not switch 74. The successive values of $a_i$ (i.e. 7, 5, 3, 1, -1, -3, -5, -7) are produced by turning on time-weighting switch 72 for periods of time proportional to the corresponding coefficient.

The output M' of the LSA apparatus 36 is supplied in parallel to switches 82 and 84. When transmissions through the fluid in the upstream direction are being received, switch 82 is closed to pass the LSA output, while switch 84 is open, and conversely when downstream transmissions are being received. The output of switch 82 therefore represents the successive terms in the algorithm representing M' for upstream transmission, and the output of switch 84 represents the corresponding terms for the downstream transmission.

The output of switch 82 is supplied to an integrator 86 which sums the term-representing signals supplied to it between successive resets, i.e. forms such a sum for each frequency sweep during upstream transmission; an integrator 88 is supplied with the output of switch 84 at alternate times, to sum up the term-representing signals for each frequency sweep during downstream transmissions. Accordingly, the output of integrator 86 represents $M'_u$ and the output of integrator 88 represents $M'_D$. Each of these integrators may be a known commercially-available device. Reset pulses are applied to each integrator over reset lines 90 and 92, at the end of each frequency sweep.

The outputs of the two integrators are supplied to respective sample-and-hold devices 94 and 96, which are actuated at times controlled by pulse signal $f_s$ to sample the outputs of each integrator after each frequency sweep of the signals supplied to it, and to hold these sampled values until the next pulse $f_s$.

The outputs of the sample-and-hold devices, which themselves may be of conventional structure and operation, are supplied to respective analog multipliers 97 and 98 connected in the feedback paths of respective operational amplifiers 99 and 100. Each of these combinations, as is known in the art, will act as a functional inverter, i.e. will produce at the output terminal of the amplifier a signal which varies as the inverse function, or reciprocal, of the input signal. Accordingly, the output of amplifiers 99 and 100 are proportional to the functions $1/M'_u$ and $1/M'_D$ respectively. The signal level applied to the + input terminals of the operational amplifiers from level source 101 acts as a multiplicative scaling factor for the output signals, and in this case such level is preferably adjusted to produce a scaling factor equal to $\frac{\pi L}{\Delta T}$; accordingly, the two amplifiers outputs represent, respectively, the functions $\pi L/M_u$ and $\pi L/M_D$.

The latter outputs of the two op amps are supplied to respective input terminals of a conventional signal subtractor 104, which responds to produce an output signal representative of the function $\pi L \, 1/M_D - \pi L \, 1/M_u$, which is identically $\pi L (1/M_D - 1/M_u)$, as desired to represent the fluid velocity being measured. A low-pass filter 120 may optionally be used to smooth the output signal, and if used preferably has a breakpoint frequency somewhat lower then the upstream-downstream switching rate.

The level applied to the amplifiers 99 and 100 from source 101 may also include a scaling factor cosine $\alpha$, if it is desired that the output signal directly represent fluid velocity along the conduit axis A-A', rather than the velocity $V_F$ along the transducer axes.

Considering the factors affecting selection of the value of the divider D, the output $E_\theta$ of the phase detector 24 may be expressed as :

$$E_\theta = \theta \bmod 2\pi \qquad . \qquad (14)$$

That is, $E_\theta$ is a monotonically increasing function f phase delay $\theta$; e.g. $\theta$ increases from zero to $2\pi$ radians, and repeats this every $2\pi$ radians. This gives a sawtooth characteristic, such as is shown for $E_\theta$ in the graph of Figure 2B.

$\theta = t\,\omega_c$, where t is the time delay of the acoustic waves in travelling from one acoustic transducer to the other and $\omega_c$ is the acoustic wave frequency in radians per second. To avoid phase ambiguity, the following condition should be met;

$$\theta_{max} < 2\pi \qquad . \qquad (15)$$

To ensure fulfilment of this condition, the dividing factor D may be selected so that the following is true:

$$D > t f_{max}, \qquad (16)$$

where $f_{max}$ is the highest acoustic-wave frequency used in the measuring process. With such a value for D, the phase delay never exceeds the period P of the acoustic wave cycle and phase ambiguity is therefore avoided.

It is, however, possible to select the value of D somewhat smaller than is given by equation (16), and still obtain the desired operation. This may be accomplished by delaying the application of the reset pulses by an amount equal to the wave transit time delay t, which enables use of the full range of the phase detector; that is, the lowest divided-down frequency can then be selected to give a near-zero duty cycle of the signal from the phase detector 24, and the highest divided-down frequency selected to give near 100% duty cycle.

The same improvement can be obtained where, as depicted in Figure 3, the received signal is always present, i.e. the switching between frequencies in each frequency sweep is substantially instantaneous. In such case the frequency of reference oscillator 20 in Figure 1 is incremented by clock oscillator 42 so that, in the example of Figure 3, the $f_8$ signal transmission starts at clock pulse 8 and persists after clock pulse 9 until clock pulse 10, at which time the frequency is shifted to $f_1$. Phase ambiguity is then avoided by selecting D to meet the following condition:

$D > (t + 1/f_8) \Delta F$, where $\Delta F$ is the total frequency sweep, e.g. from $f_1$ to $f_8$.

In one preferred embodiment then, the sweep range may be from 30 KHz to 45 KHz ($\Delta F = 15$ KHz) to measure velocity of air flow through a 152 mm diameter pipe, with the axis of the opposed acoustic transducers at $45°$ to the pipe axis and with a maximum flow velocity of about 5 meters/second. The distance between transducers may be about 0.216 meter; the velocity of sound in air under normal operating conditions is about 330 meters/second.

Under such conditions the number of cycles of delay in transit, equal to L f/c, is 28 cycles at 45 Hz and 20 cycles at 30 KHz. The propagation delay in such case is 0.65 ms. Using these values in equation (17) gives a value of 10.08 for D, so that the next larger integral number 11 is therefore chosen for D, to prevent phase ambiguity.

In Figure 3, for clarity of exposition the propagation time delay t is shown as amounting to only a cycle or so of the transmitted frequency. In the practical example specified above, the transit delay t is actually equal to a time of from about 20 to 28 cycles of the acoustic wave. Hence for the first 20-28 cycles of the reference signal following the start of each transmission at a new frequency, the phase-delay values $\theta$ are not valid, since during such time (about 0.65 ms in this example) the reference signal will represent the transmitted signal at the new frequency while the received signal will still be that due to the previous transmission at the former frequency. Accordingly, the weighting pulses $f_w$ are preferably not applied to render conductive the time-weighting switch 72 in Figure 5 until at least .65 ms after each frequency shift. Also, because of the slow response of the filter 34, the weighting pulses should typically be delayed 2 to 3 ms after each change of frequency anyway. Figure 3, for clarity, does not show such a gap between successive weighting pulses, but for the above reasons a minimum gap of about 2 ms between them is preferably provided.

If the maximum weighting pulse is chosen at about 3 ms, with a gap time of about 2 ms, a total of about 5 ms could be required for each frequency trans mission. This would theoretically permit use of as many as about 500 phase samples per frequency sweep if desired, rather than the eight used in the present example, while allowing for one "upstream" sweep and one "downstream" sweep per half-second, to give a complete output-information update once each second, if so desired.

With regard to the overall timing of the exemplified system, reference is made especially to the timing diagrams of Fig. 4. At A are shown the clock pulses from clock oscillator 42. Counter and control logic 40 is supplied with these clock pulses and at each clock pulse increments by one frequency step the frequency of signal supplied to the transducer emitting at that time. In this example, eight frequencies per sweep are used, the first frequency $f_1$ starting at clock pulse 1 and continuing until clock pulse 2, at which time the frequency is switched to the next frequency $f_2$, and so on until the eighth frequency terminates at clock pulse 9, shortly after which the reset pulse of Fig. 4C occurs.

The $f_s$ pulse of Fig. 4B begins at clock pulse 1, and has width such that its trailing edge defines the

EP 0 250 660 B1

desired time for occurrence of the reset pulse.

At D of Fig. 4 are shown the weighting pulse signal $f_\omega$ applied to switch 72 in Fig. 5. The width of these pulses correspond to the values of the coefficients $a_i$ used in the LSA procedure; as mentioned above, a small gap will preferably be provided between all weighting pulses, including the $\theta_1$ and $\theta_2$ pulses.

At E of Figure 4 are shown the LSA polarity pulses $f_a$, which turn on and off the gates 74 and 80 in Fig. 5, and at F of Fig. 4 are shown the transducer switch control signals $f_D$.

There has therefore been provided a system which measures fluid velocity accurately and reliably by transmitting acoustic waves of frequencies which differ from each other, by detecting the phase delays of such waves of different frequencies in traversing the fluid, by deriving from such data signals representative of the rate of change of phase delay with respect to frequency for such acoustic waves in traversing the fluid, and by deriving from the latter signals indications of the velocity of the fluid.

While the invention has been described with particular reference to specific embodiments thereof in the interest of complete definiteness, it may be embodied in a variety of forms diverse from those specifically shown and described, without departing from the scope of the invention as defined in the following claims.

## Claims

1. The method of measuring the velocity of a fluid along a predetermined direction (16), comprising:

transmitting acoustic waves through said fluid from a transmitter acoustic transducer (12,14) to a receiver acoustic transducer (14,12);

measuring the phase delays of said acoustic signals in travelling through said fluid from said transmitter acoustic transducer (12,14) to said receiver acoustic transducer (14,12), to produce first signals representative of said phase delays; characterized in that the frequency of said acoustic waves is varied between different values; and said first signals represent different frequency values

second signals are produced representative of said different values of frequency of said acoustic waves; and in that

from said first and second signals, third signals representative of the rate of change of said delays with frequency are derived; and in that

from said third signals, fourth signals representative of said fluid velocity are derived.

2. The method of Claim 1, wherein said frequency is varied repeatedly among at least three values, and said deriving of said third signal comprises subjecting of said first and second signals to a least-squares-algorithm for deriving a statistically enhanced value of said third signal.

3. The method of claim 1, wherein:

first acoustic waves of a varying plurality of frequencies are transmitted along the predetermined direction from a first station to a second station;

said first acoustic waves are received at said second station, and from the received first acoustic waves a first signal representative of the phase delay of those of said first acoustic waves is produced having one of said frequencies in travelling from said first station to said second station, and a second signal representative of the phase delay of those of said first waves having another of said frequencies in travelling from said first station to said second station is produced;

said first and second signals are compared to produce a third signal having a value $m_d$ representative of the rate of change $M_D$ of said phase delay of said first acoustic waves with respect to frequency;

second acoustic waves of a varying plurality of frequencies are transmitted in the direction opposite to said direction from said second station to said first station;

said second acoustic waves are received at said first station and from the received second acoustic waves a fourth signal is produced representative of the phase delay of those of said second acoustic waves having one of the frequencies of said second acoustic waves in travelling from said second station to said first station and a fifth signal is produced representative of the phase delay of those of said second acoustic waves having another of the frequencies of said second acoustic waves in travelling from said second station to said first station;

said fourth and fifth signals are compared to produce a sixth signal having a value $m_u$ representative of the rate of change $M_U$ of said phase delay of said second acoustic waves with respect to frequency;

10

and wherein data as to said third signal representative of $M_D$, data as to said sixth signal representative of $M_U$, data representing said one and said other frequencies of said first and second acoustic waves, and data representing the distance L between said first and second stations is supplied to computing means to compute therefrom the velocity of flow of said fluid along said direction.

4. The method of claim 3, wherein the first acoustic waves of a plurality of frequencies are transmitted along said direction from a first station to a second station, and wherein said velocity of flow V is computed according to the formula

$$V = \pi L \left(\frac{1}{M_D} - \frac{1}{M_U}\right).$$

5. Apparatus for measuring the velocity of flow of a fluid along a predetermined direction (16), comprising:

(a) signal-generating means (20) for generating reference signals;

(b) acoustic transmitter means (12, 14) responsive to said reference signals for transmitting corresponding acoustic waves along said direction;

(c) acoustic receiver means (14, 12) for receiving said transmitter acoustic waves after they have traversed said fluid;

(d) means (fa) for producing first signals representative of the frequency of said transmitted signal;

(e) phase sensing means (24) responsive to said received acoustic waves and to said reference signals for producing second signals (32) representative of the phase delay of said received acoustic waves with respect to said transmitted acoustic waves;

(f) frequency-changing means (42, 20) for changing the frequency of said transmitted acoustic waves, whereby said phase delay varies correspondingly;

(g) means (36) responsive to said first signals representative of frequency and to said second phase-delay representing signals to produce third signals representative of the rate-of-change of said phase delay with respect to said changes in frequency; and

(h) means (38) responsive to said third signal to produce output signals (VF) representative of said fluid velocity.

6. The apparatus of Claim 5, wherein said frequency-changing means comprises means for changing said frequency in steps.

7. The apparatus of Claim 6, wherein said steps are equal to each other.

8. The apparatus of Claim 6, wherein said frequencies are of random values.

9. The apparatus of Claim 6, wherein said frequency-changing means comprises means for varying said frequency among at least three different values, and said means to produce said third signal comprises least-squares-algorithm means (36) supplied with said first and second signals.

10. The apparatus of any one of claims 5 to 9, wherein said phase-sensing means comprises means for producing lower-frequency signals, one of which is at a submultiple of the frequency of said reference signal and in fixed phase relation thereto and the other of which is at the same submultiple of the frequency of said received waves and in fixed phase relation thereto, means responsive to said one and said other submultiple signal to produce a further signal having a duty cycle proportional to said phase delay of said received acoustic waves, and means responsive to said further signals for producing still other signals representative of said duty cycle and hence of said phase delay.

## Revendications

1. Procédé pour mesurer la vitesse d'un fluide dans une direction prédéterminée (16), suivant lequel :

on émet des ondes acoustiques à travers le fluide à partir d'un transducteur acoustique émetteur (12, 14) vers un transducteur acoustique récepteur (14, 12):

on mesure les retards de phase des signaux acoustiques, lors de leur passage à travers le fluide depuis le transducteur acoustique émetteur (12, 14) jusqu'au transducteur acoustique récepteur (14, 12), afin de produire des premiers signaux représentatifs de ces retards de phase,

caractérisé en ce que la fréquence des ondes acoustiques varie entre des valeurs différentes; et les premiers signaux représentent des valeurs de fréquence différentes;

des deuxièmes signaux sont produits, représentatifs des différentes valeurs de fréquence des ondes acoustiques; et en ce que

des troisièmes signaux représentatifs de la vitesse de variation des retards avec la fréquence sont calculés à partir des premiers et deuxièmes signaux; et en ce que

des quatrièmes signaux représentatifs de la vitesse du fluide sont calculés à partir des troisièmes signaux.

2. Procédé suivant la revendication 1, dans lequel la fréquence varie de manière répétée parmi au moins trois valeurs et le calcul du troisième signal implique la soumission des premier et deuxième signaux à un algorithme des moindres carrés pour déduire une valeur statistiquement améliorée du troisième signal.

3. Procédé suivant la revendication 1, dans lequel :

des premières ondes acoustiques d'une pluralité variable de fréquences sont émises, dans la direction prédéterminée, d'un premier poste vers un second;

les premières ondes acoustiques sont reçues au second poste et, à partir des premières ondes acoustiques reçues, un premier signal est produit, représentatif du retard de phase de celles des premières ondes acoustiques qui présentent une desdites fréquences lors de leur passage du premier poste au second, et un second signal est produit, représentatif du retard de phase de celles des premières ondes qui présentent une autre desdites fréquences lors de leur passage du premier poste au second;

le premier et le deuxième signal sont comparés pour produire un troisième signal ayant une valeur $m_d$ représentative de la vitesse de variation $M_D$ du retard de phase des premières ondes acoustiques par rapport à la fréquence;

des secondes ondes acoustiques d'une pluralité variable de fréquences sont émises dans la direction opposée a ladite direction, c'est-à-dire du second poste vers le premier;

les secondes ondes acoustiques sont reçues au premier poste et, à partir des secondes ondes acoustiques reçues, un quatrième signal est produit, représentatif du retard de phase de celles des secondes ondes acoustiques qui présentent une des fréquences des secondes ondes acoustiques lors de leur passage du second poste au premier et un cinquième signal est prévu, représentatif du retard de phase de celles des secondes ondes acoustiques qui présentent une autre des fréquences des secondes ondes acoustiques lors de leur passage du second poste au premier;

les quatrième et cinquième signaux sont comparés pour produire un sixième signal ayant une valeur $m_u$ représentative de la vitesse de variation $M_U$ du retard de phase des secondes ondes acoustiques par rapport à la fréquence;

et dans lequel des données concernant ledit troisième signal représentatif de $M_D$, des données concernant le sixième signal représentatif de $M_U$, et des données représentant la première et les autres fréquences des premières et secondes ondes acoustiques, ainsi que des données représentant la distance L entre le premier et le second poste sont fournies à des moyens de calcul qui s'en servent pour calculer la vitesse d'écoulement du fluide dans ladite direction.

4. Procédé suivant la revendication 3, dans lequel les premières ondes acoustiques d'une pluralité de fréquences sont émises dans ladite direction d'un premier poste vers un second et dans lequel la vitesse d'écoulement V est calculée selon la formule :

$$V = \pi L \left( \frac{1}{M_D} - \frac{1}{M_U} \right)$$

5. Appareil pour mesurer la vitesse d'écoulement d'un fluide dans une direction prédéterminée (16), comprenant :

(a) un dispositif générateur de signaux (20) pour engendrer des signaux de référence;

(b) un dispositif émetteur acoustique (12, 14) réagissant aux signaux de référence pour émettre des ondes acoustiques correspondantes dans ladite direction;

(c) un dispositif récepteur acoustique (14, 12) destiné à recevoir les ondes acoustiques de l'émetteur après qu'elles ont traversé le fluide;

(d) un dispositif (fa) pour produire des premiers signaux représentatifs de la fréquence du signal émis;

(e) un dispositif détecteur de phase (24) réagissant aux ondes acoustiques reçues et aux signaux de référence pour produire des seconds signaux (32) représentatifs du retard de phase des ondes acoustiques reçues par rapport aux ondes acoustiques émises;

(f) un dispositif changeur de fréquence (42, 20) pour changer la fréquence des ondes acoustiques émises, le retard de phase variant de manière correspondante;

(g) un dispositif (36) réagissant aux premiers signaux représentatifs de la fréquence et aux deuxièmes signaux représentatifs du retard de phase pour produire des troisièmes signaux représentatifs de la vitesse de variation du retard de phase par rapport aux variations de fréquence, et

(h) un dispositif (38) réagissant au troisième signal pour produire des signaux de sortie (VF) représentatifs de la vitesse du fluide.

6. Appareil suivant la revendication 5, dans lequel le dispositif changeur de fréquence comprend un dispositif destiné à changer la fréquence pas à pas.

7. Appareil suivant la revendication 6, caractérisé en ce que les pas sont égaux entre eux.

8. Appareil suivant la revendication 6, dans lequel les fréquences sont de valeurs aléatoires.

9. Appareil suivant la revendication 6, dans lequel le dispostif changeur de fréquence comprend un dispositif pour faire varier la fréquence parmi au moins trois valeurs différentes, et le dispositif destiné à produire le troisième signal comprend un dispositif à algorithme des moindres carrés (36) alimenté par les premiers et deuxièmes signaux.

10. Appareil suivant l'une quelconque des revendications 5 à 9, dans lequel le dispositif détecteur de phase comprend un dispositif pour produire des signaux de fréquence inférieure dont l'un est à un sous-multiple de la fréquence du signal de référence et dans une relation de phase fixe par rapport à celui-ci et l'autre est au même sous-multiple de la fréquence des ondes reçues et dans une relation de phase fixe par rapport à celles-ci, un dispositif sensible au premier et à l'autre signal de sousmultiple pour produire un autre signal présentant un coefficient d'utilisation proportionnel au retard de phase des ondes acoustiques reçues, et un dispositif réagissant aux autres signaux pour produire encore d'autres signaux représentatifs du coefficient d'utilisation et, par conséquent, du retard de phase.

## Ansprüche

1. Verfahren zum Messen der Geschwindigkeit einer Flüssigkeit entlang einer vorbestimmten Richtung (16) mit:
Übertragung von akustischen Wellen durch die besagte Flüssigkeit von einem akustischen Sender-Wandler (12,14) zu einem akustischen Empfänger-Wandler (14,12);
Messen der Phasenverzögerungen der besagten akustischen Signale beim Durchlaufen der besagten Flüssigkeit vom besagten akustischen Sender-Wandler (12,14) zum besagten akustischen Empfänger-Wandler (14,12) zum Erzeugen von ersten besagte Phasenverzögerungen darstellenden Signalen;
dadurch gekennzeichnet, daß die Frequenz der besagten akustischen Wellen zwischen unterschiedlichen Werten verändert wird; und besagte erste Signale unterschiedliche Frequenzwerte darstellen;
daß zweite die besagten unterschiedlichen Frequenzwerte der besagten akustischen Wellen darstellende Signale erzeugt werden;
und daß aus besagten ersten und zweiten Signalen dritte die Änderungsgeschwindigkeit der besagten Verzögerungen mit der Frequenz darstellende Signale abgeleitet werden; und daß
von besagten dritten Signalen vierte die besagte Flüssigkeitsgeschwindigkeit darstellende Signale abgeleitet werden.

2. Verfahren nach Anspruch 1, dadurch gekennzeichnet, daß die besagte Frequenz wiederholt zwischen

EP 0 250 660 B1

mindestens drei Werten verändert wird, und die besagte Ableitung des besagten dritten Signals umfaßt, besagte erste und zweite Signale einem Algorithmus der kleinsten Quadrate zur Ableitung eines statistisch verbesserten Wertes des besagten dritten Signales zu unterwerfen.

3. Verfahren nach Anspruch 1, dadurch gekennzeichnet, daß erste akustische Wellen einer veränderlichen Mehrzahl von Frequenzen entlang der vorbestimmten Richtung von einer ersten Station zu einer zweiten Station übertragen werden;

besagte erste akustische Wellen an der besagten zweiten Station empfangen werden und aus den empfangenen ersten akustischen Wellen ein erstes Signal erzeugt wird, das die Phasenverzögerung der besagten ersten akustischen Wellen mit einer der besagten Frequenzen beim Fortschreiten von der besagten ersten Station zur besagten zweiten Station darstellt, und ein zweites Signal erzeugt wird, das die Phasenverzögerung der besagten ersten Wellen mit einer anderen der besagten Frequenzen beim Fortschreiten der besagten ersten Station zur besagten zweiten Station darstellt;

daß besagte erste und zweite Signale verglichen werden, um ein drittes Signal mit einem Wert $m_d$ zu erzeugen, das die Veränderungsgeschwindigkeit $M_D$ der besagten Phasenverzögerung der besagten ersten akustischen Wellen im Bezug auf die Frequenz darstellt;

zweite akustische Wellen einer veränderlichen Mehrzahl von Frequenzen in der entgegengesetzten Richtung zur besagten Richtung von der besagten zweiten Station zur besagten ersten Station übertragen werden;

daß besagte zweite akustische Wellen an der besagten ersten Station empfangen werden und aus den empfangenen zweiten akustischen Wellen ein viertes Signal erzeugt wird, das die Phasenverzögerung der besagten zweiten akustischen Wellen mit einer der Frequenzen der besagten zweiten akustischen Wellen beim Fortschreiten von der besagten zweiten Station zur besagten ersten Station darstellt, und ein fünftes Signal erzeugt wird, das die Phasenverzögerung der besagten zweiten akustischen Wellen mit einer weiteren der Frequenzen der besagten zweiten akustischen Wellen beim Fortschreiten von der besagten zweiten Station zur besagten ersten Station darstellt;

daß besagte vierte und fünfte Signale verglichen werden, um ein sechstes Signal mit einem die Veränderungsgeschwindigkeit $M_U$ der besagten Phasenverzögerung der besagten zweiten akustischen Wellen im Bezug auf Frequenz darstellenden Wert $m_u$ zu erzeugen;

und daß Daten bezüglich des $M_D$, darstellenden dritten Signals, Daten bezüglich des $M_U$, darstellenden sechsten Signals, die besagte eine und die besagten anderen Frequenzen der besagten ersten und zweiten akustischen Wellen darstellende Daten und die Entfernung L zwischen besagten ersten und zweiten Stationen darstellende Daten zu Rechenmitteln zugeführt werden, um daraus die Strömungsgeschwindigkeit der besagten Flüssigkeit entlang der besagten Richtung zu berechnen.

4. Verfahren nach Anspruch 3, dadurch gekennzeichnet, daß die ersten akustischen Wellen einer Mehrzahl von Frequenzen entlang der besagten Richtung von einer ersten Station zu einer zweiten Station übertragen werden und daß die besagte Strömungsgeschwindigkeit V entsprechend der Formel berechnet wird

$$V = \pi L \left( \frac{1}{M_D} - \frac{1}{M_U} \right).$$

5. Vorrichtung zum Messen der Strömungsgeschwindigkeit einer Flüssigkeit entlang einer vorbestimmten Richtung (16), gekennzeichnet durch:

(a) Signalerzeugungsmittel (20) zum Erzeugen von Bezugssignalen;

(b) auf besagte Bezugssignale zur Übertragung von entsprechenden akustischen Wellen entlang der besagten Richtung reagierende akustische Sendermittel (12,14);

(c) akustische Empfängermittel (14,12) zum Empfangen der besagten akustischen Senderwellen nach ihrem Durchlaufen der besagten Flüssigkeit;

(d) Mittel (fa) zum Erzeugen von ersten die Frequenz des besagten übertragenen Signals darstellenden Signalen;

(e) auf besagte empfangene akustische Wellen und auf besagte Bezugssignale reagierende Phasenerfassungsmittel (24) zum Erzeugen von die Phasenverzögerung der besagten akustischen Wellen im Bezug auf die übertragenen akustischen Wellen darstellenden zweiten Signalen (32);

(f) Frequenzveränderungsmittel (42,26) zum Ändern der Frequenz der besagten übertragenen

14

akustischen Wellen, wodurch sich die besagte Phasenverzögerung entsprechend verändert;

(g) auf die besagten die Frequenz darstellenden ersten Signale und auf besagte zweite Phasenverzögerung darstellende Signale reagierende Mittel (36) zum Erzeugen von die Veränderungsgeschwindigkeit der besagten Phasenverzögerung im Bezug auf besagte Frequenzänderungen darstellenden dritten Signalen; und

(h) auf besagtes drittes Signal reagierende Mittel (38) zum Erzeugen von die besagte Flüssigkeitsgeschwindigkeit darstellenden Ausgangssignalen (VF).

6. Vorrichtung nach Anspruch 5, dadurch gekennzeichnet, daß die besagten Frequenzveränderungsmittel Mittel zum schrittweisen Verändern der besagten Frequenz umfassen.

7. Vorrichtung nach Anspruch 6, dadurch gekennzeichnet, daß die besagten Schritte einander gleich sind.

8. Vorrichtung nach Anspruch 6, dadurch gekennzeichnet, daß die besagten Frequenzen Zufallswerte besitzen.

9. Vorrichtung nach Anspruch 6, dadurch gekennzeichnet, daß das besagte Frequenzveränderungsmittel Mittel zum Verändern der besagten Frequenz zwischen mindestens drei unterschiedlichen Werten umfaßt und die besagten Mittel zum Erzeugen des besagten dritten Signals Mittel für den Algorithmus der kleinsten Quadrate (36) umfaßt, die mit den besagten ersten und zweiten Signalen versorgt werden.

10. Vorrichtung nach einem beliebigen der Ansprüche 5 bis 9, dadurch gekennzeichnet, daß das besagte Phasenerfassungsmittel Mittel zum Erzeugen von Signalen niedrigerer Frequenz, wovon eine auf einem Bruchteil der Frequenz des besagten Bezugssignals liegt und in fester Phasenbeziehung damit steht und deren andere auf demselben Bruchteil der Frequenz der besagten empfangenen Wellen liegt und in fester Phasenbeziehung damit steht, auf besagtes eine und besagtes andere Bruchteilsignal reagierende Mittel zur Erzeugung eines weiteren Signals mit einem zur besagten Phasenverzögerung der besagten empfangenen akustischen Wellen proportionalen Arbeitszyklus, und auf besagte weitere Signale reagierende Mittel zur Erzeugung von noch weiteren den besagten Arbeitszyklus und daher die besagte Phasenverzögerung darstellenden Signalen umfaßt.

*Fig. 1.*

Fig. 2B.

Fig. 2A.

Fig.3.

(A) $f_u$
(B) $f_u/4$
DELAY
(C) $f_u'$
(D) $f_u'/4$
(E) $2\pi PD$

$t=0$ (RESET)

Fig.4.

(A) CLOCK
(B) $f_s$
(C) RESET
(D) $f_w$
(E) $f_a$
(F) $f_d$

EP 0 250 660 B1

Fig. 5.